# EUROPÄISCHE PATENTSCHRIFT

(11) **EP 2 532 550 B1**
(45) Veröffentlichungstag und Bekanntmachung des Hinweises auf die Patenterteilung: **09.03.2016**
(21) Anmeldenummer: 12171559.3
(22) Anmeldetag: 11.06.2012
(51) Int. Cl.: B60K 15/00, G01F 23/00, B60K 15/03, G01F 23/24, G08B 13/14, G08B 21/18

(54) **Tanküberwachungseinrichtung gegen Kraftstoffdiebstahl aus einem Kraftstofftank**
Device for monitoring a tank to prevent fuel from being stolen from a fuel tank
Dispositif de surveillance de réservoir contre le vol de carburant depuis un réservoir de carburant

(30) Priorität: 09.06.2011 DE 202011101641 U
(43) Veröffentlichungstag der Anmeldung: 12.12.2012
(73) Patentinhaber: Huis, Wolfgang, 49811 Lingen / Ems (DE); Weber, Denis, 49808 Lingen (DE)
(72) Erfinder: Huis, Wolfgang, 49811 Lingen / Ems (DE); Weber, Denis, 49808 Lingen (DE)
(74) Vertreter: Manitz, Finsterwald & Partner GbR

(56) Entgegenhaltungen:
- WO-A2-2010/020821
- CN-A- 102 044 121
- DE-U1-202005 002 320
- GB-A- 2 338 308

## Beschreibung

Die vorliegende Erfindung betrifft eine Tanküberwachungseinrichtung gegen Kraftstoffdiebstahl aus einem Kraftstofftank, die einen Tankfüllstandmesser aufweist, wobei eine Kraftstoffmenge anhand eines Widerstandswertes oder eines Spannungswertes des Tankfüllstandmessers gemessen wird.

Der Diebstahl von Diesel und weiteren Kraftstoffen aus Baumaschinen und LKWs und anderen mobilen und stationären Tankanlagen ist bekannt. Mit steigenden Kraftstoffpreisen ist mit einer Zunahme von Kraftstoffdiebstählen zu rechnen. Hierbei entsteht nicht nur der Verlust des Rohstoffs, was z.B. bei Tankgrößen von 500 bis 600 1 schon einen erheblichen finanziellen Verlust bedeutet, sondern es wird bei einem Diebstahl ein nicht unerheblicher Sachschaden verursacht, indem geschlossene Tankanlagen gewaltsam aufgebrochen bzw. zerstört werden. Mechanische Sperren und abgeschlossene Tankeinfüllstutzen bieten hier keinen ausreichenden Schutz vor Diebstahl, da die Kraftstofftanks auch entleert werden können, indem diese einfach angebohrt oder mit spitzen Gegenständen gelocht werden.

Die WO 2010/020821 A2 und die CN 102 044 121 A zeigen jeweils eine Tanküberwachungssystem gemäß dem Oberbegriff des Anspruchs 1. Weiterer Stand der Technik wird in den Dokumenten DE 20 2005 002 320 U1 und GB 2338308 A offenbart.

Die Aufgabe der vorliegenden Erfindung ist, ein universell einsetzbares Tanküberwachungssystem bereitzustellen, welches unregelmäßige, außergewöhnliche Abnahmemengen registriert.

Die Aufgabe wird durch eine Tanküberwachungseinrichtung gemäß dem unabhängigen Anspruch 1 gelöst.

Da verschiedene Tankfüllstandmesser unterschiedliche Widerstandswerte bei gleicher Füllmenge aufweisen, kann der vorliegende Erfindungsgegenstand so ausgebildet werden, dass er für verschiedene Typen von Tankfüllstandmesser eingesetzt werden.

Hersteller von LKWs und Baumaschinen setzen für verschiedene LKW-Typen verschiedene Tankfüllstandmesser ein. Vorwiegend werden widerstandsabhängige oder aber auch kapazitive spannungsabhängige Füllstandsensoren eingesetzt. Wenn nun eine Speditionsfirma mehrere LKWs verschiedener Baureihen und/oder von verschiedenen Herstellern mit Tanküberwachungen nachrüsten will, wäre es unwirtschaftlich, für jeden LKW-Typ eine eigene Tanküberwachungseinrichtung einzubauen, die einzeln angefertigt werden muss. Mittels der vorliegenden Tanküberwachungseinrichtung kann nun erstmalig eine große Vielfalt an gängigen Tankfüllstandmessern mit ein und derselben Tanküberwachungseinrichtung verbunden werden. Die Tanküberwachungseinrichtung kann nun mittels des Mikroprozessors an den jeweiligen LKW-Typ angepasst werden.

Des Weiteren kann auch eine Zunahme des Inhalts des Kraftstofftanks ermittelt werden, z.B. wenn von außen Wasser oder andere Materialien in den Tank eingeführt werden, um diesen zu beschädigen.

Dadurch, dass ein Alarmsignal ausgelöst wird, wenn eine Entnahme bzw. eine scheinbare Zunahme von Kraftstoff erkannt wird, können mittels eines geeigneten Alarms z.B. Menschen in der Umgebung bzw. ein mit dem Alarm verbundener Sicherheitsdienst darauf aufmerksam gemacht werden, dass eine momentane Kraftstoffentnahme bzw. scheinbare Zunahme stattfindet. Unter Umständen kann so der Täter bzw. die Täter auf frischer Tat gefasst werden.

Die vorliegende Erfindung ist in erster Linie zum einfachen nachträglichen Einbau in Fahrzeugen gedacht. Natürlich kann Sie aber auch bei Neufahrzeugen in der Serienproduktion oder aber auch als Upgrade eingebaut werden.

Weiter ist ein Potentiometer vorgesehen, welcher mit dem Tankfüllstandmesser kooperiert. Insbesondere ist der Potentiometer ein mehrstufiger Potentiometer, um die Messwerte unterschiedlicher widerstandsabhängiger Füllstandgeber von Kraftstofftanks und deren unterschiedliche Tankvolumen anzupassen. Solch ein mehrstufiger Potentiometer ermöglicht eine Anpassung an unterschiedliche Tankvolumen, d.h. die Möglichkeit unterschiedliche Tankvolumen auszugleichen, ohne dass der Mikroprozessor selbst verändert werden muss. Die Verwendung eines mehrstufigen Potentiometers ermöglicht es auch Feineinstellungen in der Genauigkeit der Messung der im Kraftstofftank vorhandenen Kraftstoffmenge vorzunehmen. Eine genauere Messung der tatsächlich vorhandenen Kraftstoffmenge erlaubt eine schnellere Erfassung einer möglichen unerlaubten Veränderung des Tankfüllstandes und kann deshalb zu einer schnelleren Alarmausgabe führen.

Dadurch, dass ein mehrstufiger Potentiometer eingesetzt wird, kann eine noch größere Anzahl an verschiedenen Tankfüllstandmesser mittels ein und derselben Tanküberwachungseinrichtung verwendet werden, so dass die Tanküberwachungseinrichtung noch vielfältiger eingesetzt werden kann.

Vorzugsweise ist der Mikroprozessor dazu ausgebildet, Widerstandswerte oder Spannungswerte periodisch zu erfassen. Ein periodisches Messen der Widerstandswerte oder Spannungswerte lässt genauere Rückschlüsse über eine zeitliche Veränderung der vorhandenen Kraftstoffmenge zu. Gegebenenfalls kann so auch ein Leck im Kraftstofftank erfasst werden und dem Betreiber mitgeteilt werden. Durch den periodischen Messzyklus wird nur für eine geringe Zeit der Gesamtstrom benötigt, so dass sich das Modul in der übrigen Zeit im Stromsparmodus befindet, was zu einer deutlichen Reduzierung des Batterieverbrauchs führt und z.B. bei stationären Anlagen zu einer Verlängerung der Ladungszyklen der Batterie, die der Tanküberwachung zugeordnet ist.

Vorzugsweise ist der Mikroprozessor dazu ausgebildet, ein lautloses Alarmsignal auszugeben. Ein lautloses Signal wird z.B. mittels eines GSM-Moduls an einen Sicherheitsdienst, eine Privatperson bzw. die Polizei übermittelt, um dem Sicherheitsdienst, der Privatperson bzw. der Polizei einen möglichen Diebstahl anzuzeigen.

Vorzugsweise werden obere bzw. untere Schwellwerte vorgesehen. Ist der Mikroprozessor ausgelegt, um nur die Veränderungen des Widerstandswertes bzw. Spannungswertes zu berücksichtigen, die unterhalb des unteren Schwellwertes oder oberhalb des oberen Schwellwerts liegen. So kann z.B. ein Schwellwert gesetzt werden, der Fehlmeldungen durch Bewegungen des Fahrzeuges durch Wind, Temperaturschwankungen durch Ausdehnung des Kraftstoffes, am Fahrzeug vorhandene Kühlaufbauten bzw. Standheizungen oder andere leichte Störeinflüsse verhindert. Solche Störeinflüsse könnten beispielsweise entstehen, wenn ein Baustellenfahrzeug auf einem Tieflader transportiert wird und hierdurch Bewegungen des Kraftstoffs im Tank stattfinden, obwohl keine Kraftstoffentnahme erfolgt. Sollte der Kraftstofftank ein Leck aufweisen, können geringste Mengen an Kraftstoff auslaufen. Die Tatsache, dass ein Leck erkannt wurde, muss zwar dem Betreiber des Kraftstofftanks mitgeteilt werden, jedoch ist die Ausgabe eines Alarms aufgrund eines Lecks nicht unbedingt erforderlich, da ein Fehlalarm auch amtliche Kosten verursachen kann.

Vorzugsweise wird der obere bzw. untere Schwellwert in Abhängigkeit von Zeit und elektrischen Einheiten ausgewählt. Der Schwellwert kann beispielsweise so gewählt werden, dass eine vordefinierte Veränderung des Widerstandswertes oder Spannungswertes pro Minute als zulässig akzeptiert wird, z.B. wenn der Mikroprozessor ein kleines Leck erfasst hat.

Vorzugsweise ist der Mikroprozessor dazu ausgebildet, die gespeicherten Widerstands- oder Spannungswerte periodisch oder willkürlich nach längeren Standzeiten zurückzusetzen. Diese Funktion ermöglicht es dem Mikroprozessor eine auch im Ruhestand der Maschine vorhandene Kraftstoffmengenschwankung zu berücksichtigen, z.B. bei kontinuierlichem Kraftstoffverbrauch aufgrund von Kühlaufbauten bzw. Standheizungen an einem Fahrzeug oder aber auch durch eine durch Temperaturschwankungen hervorgerufene Zunahme bzw. Abnahme des Volumens der Kraftstoffmenge, z.B. durch thermische Dehnungen. Hierbei kann die Ausgabe an Fehlalarmmeldungen deutlich reduziert werden.

Vorzugsweise wird die Tanküberwachungseinrichtung beim Abschalten des Fahrzeuges bzw. des Kraftstofftanks aktiviert. Ein fahrender LKW benötigt typischerweise keine aktive Tanküberwachung. Sollte der LKW-Fahrer aber z.B. einen Rastplatz anfahren, um seine gesetzlich vorgeschriebenen Ruhepausen einzuhalten, kann die Tanküberwachung bei Abschaltung des Motors aktiviert werden. Zur Aktivierung kann auch ein anderes Signal verwendet werden, z.B. ein Signal von der Tachowelle eines Fahrzeugs, um in Ruhepausen der Maschine die Zündung weiterhin anzulassen. In diesem Falle ist es hilfreich, wenn z.B. eine Hupe als Alarmsignal verwendet wird, da dem Fahrer so direkt mitgeteilt werden kann, dass gegebenenfalls Kraftstoff entwendet wird.

Vorzugsweise wird die im Kraftstofftank vorhandene Kraftstoffmenge beim Abschalten des Fahrzeugs oder beim Abschließen eines Kraftstoffvorrats beispielsweise an einer Baustelle ermittelt und abgespeichert. Das Abspeichern dieser Volumenwerte kann zudem verwendet werden, um einer Versicherung nicht nur den durch den Diebstahl verursachten Sachschaden anzuzeigen, sondern auch als Nachweis für die verlorene Kraftstoffmenge dienen, so dass bei einem Diebstahl zumindest der finanzielle Schaden beziffert werden kann.

Über einen Mikroprozessor wird die Kraftstoffüberwachungseinrichtung an unterschiedliche Kraftstofftanks bzw. unterschiedliche Füllstandmesseinrichtungen angepasst.

Vorzugsweise ist ein Kontaktelement oder ein Signalgeber vorgesehen, welche bei aktivierter Tanküberwachungseinrichtung das Alarmsignal ausgeben. Dieses Kontaktelement kann z.B. ein GSM-Modul oder ein anderes Funkmodul oder aber auch ein Akustikmodul sein, welches mit der Tanküberwachung verbunden ist, um ein Alarmsignal auszugeben. Funkmodule werden bevorzugt verwendet, um einer Zentralenstelle mitzuteilen, dass eine Veränderung der Kraftstoffmenge stattfindet. Akustische Signale bzw. visuelle Signale werden in der Regel dazu verwendet, um den bzw. die Täter abzuschrecken.

Vorzugsweise ist der Mikroprozessor über eine Programmierleiste programmierbar. So können z.B. nachträgliche Software-Updates dem Mikroprozessor mitgeteilt werden.

Des Weiteren kann der Mikroprozessor einen Datenspeicher aufweisen, in dem verschiedene Widerstandswerte von verschiedenen LKW-Typen für verschiedene im jeweiligen Tank vorhandene Kraftstoffmengen abgespeichert sind. Dies ermöglicht beim Messen des Widerstandswertes eine Bestimmung der momentan vorhandenen Kraftstoffmenge.

Vorzugsweise ist der Mikroprozessor dazu ausgebildet, anhand von jeweilig gemessenen Spannungs- oder Widerstandswerten für einen vollen und einen leeren Kraftstofftank automatisch eine Datenbank zu erstellen, in der Kraftstoffmengen für einzelne Widerstandswerte abgespeichert werden. Die Tanküberwachungseinrichtung kann somit mit verschiedenen Kraftstofftanks verwendet werden. Dadurch kann anhand von jeweils gemessenen Messwerten ein leerer Zustand bzw. ein voller Zustand des Kraftstofftanks ermittelt und für den weiteren Betrieb ausgenützt werden. So kann die Tanküberwachung ohne ein zusätzliches Programmieren eingesetzt werden, was den Einbau der Tanküberwachungseinrichtung erheblich vereinfacht.

Vorzugsweise ist eine zusätzliche Batterie vorgesehen, um eine Notstromversorgung zu gewährleisten. So kann sichergestellt werden, dass auch bei einer leeren bzw. entkoppelten Batterie eine Überwachung stattfinden kann.

Vorzugsweise ist die Tanküberwachungseinrichtung dazu ausgebildet, zu erkennen, ob die Notstromversorgung aktiviert worden ist. Wenn die Tanküberwachung erkennen sollte, dass die Notstromversorgung aktiviert worden ist, kann dies einem Techniker mitgeteilt werden, um z.B. die Batterie des LKWs zu überprüfen.

Vorzugsweise ist die Tanküberwachungseinrichtung dazu ausgebildet, beim Erkennen der aktivierten Notstromversorgung ein Sabotagealarmsignal auszugeben. So kann frühzeitig z.B. einem Sicherheitsdienst mitgeteilt werden, dass ein Sabotageakt beginnt, beispielsweise das Abklemmen der Hauptversorgung (Batterie).

Vorzugsweise kann auch bei nicht aktivierter Tanküberwachungseinrichtung eine unregelmäßige Kraftstoffentnahme registriert und über den Mikroprozessor in zeitlicher Zuordnung z.B. über eine Schnittstelle bzw. einen Programmierstecker ausgelesen werden. Die Tanküberwachungseinrichtung kann auch bei sich im Betrieb befindlichen Maschinen aktiv sein bzw. aktivierbar sein, z.B. kann mittels des programmierbaren Mikroprozessors die Kraftstoffmenge im Kraftstofftank periodisch überwacht werden und bei über- bzw. unterschreiten eines Schwellwertes eines vorgegebenen Kraftstoffmittelverbrauchs ein Alarm ausgelöst werden. So können unregelmäßige, außergewöhnliche Abnahmemengen auch bei nicht aktivierter Überwachung über den Mikroprozessor ausgelesen werden. Dadurch lassen sich Kraftstofftanks auch während des laufenden Betriebs kontrollieren und somit außergewöhnliche Änderungen der im Kraftstofftank vorhandenen Kraftstoffmenge erfasst werden, beispielsweise dann, wenn aufgrund eines Unfalls auf einer Baustelle ein Leck im Kraftstofftank entstanden ist oder eine ungewöhnliche Kraftstoffmenge auch bei ausgeschalteter Alarmanlage entnommen wird. Dies kann z.B. dann passieren, wenn Kraftstoff bei laufender Maschine durch Fahrer oder andere Personen entnommen wird.

Vorzugsweise kann mittels weiterer Sensoren auch eine Überwachung von Anbauteilen eines Kraftstofftanks, oder Anbauteilen einer Einheit, die den Kraftstofftank beinhaltet, durchgeführt werden und bei einer Veränderung eines Signals der Sensoren ein Alarmsignal ausgegeben werden. Das heißt, dass die Tanküberwachung einen zusätzlichen Eingang aufweist, um Signale von externen Sensoren zu erfassen, so dass eine zusätzliche Überwachung von z.B. Spiegeln, Tankdeckeln, Leuchten eines LKWs durchgeführt werden kann. Über diesen Alarmeingang wird eine zeitliche Dokumentation hinterlegt, um auch nachträglich zu erfassen, wie oft z.B. ein Tankdeckel geöffnet wurde. Dies kann auch auf eine unerlaubte Entnahme von Kraftstoff hinweisen.

Weitere Vorteile sind den weiteren Unteransprüchen sowie der weiteren Beschreibung zu entnehmen.

Die Erfindung wird nachfolgend anhand von Ausführungsbeispielen unter Bezugnahme auf die Zeichnungen näher erläutert, in denen zeigen:
- Fig. 1: eine schematische Darstellung der Anordnung der erfindungsgemäßen Tanküberwachungseinrichtung,
- Fig. 2: eine mögliche Ausführungsform eines Schaltplans einer erfindungsgemäßen Tanküberwachungseinrichtung, und
- Fig. 3: eine weitere mögliche Ausführungsform eines Schaltplans einer erfindungsgemäßen Tanküberwachung.

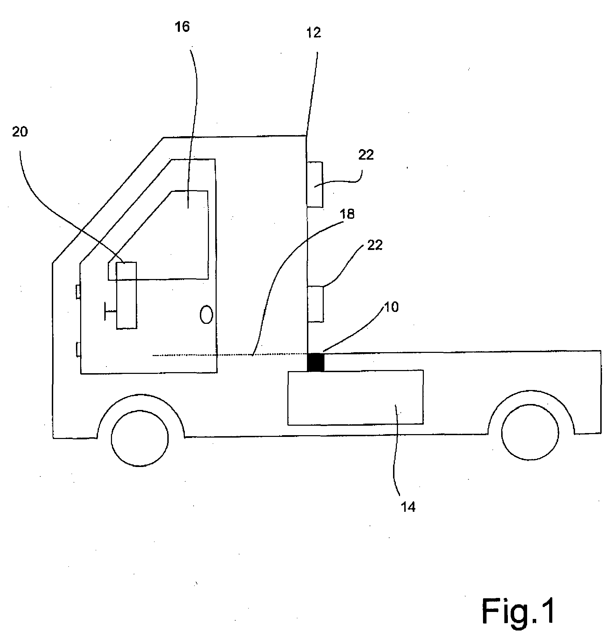

Die Fig. 1 zeigt eine schematische Darstellung der Anordnung der erfindungsgemäßen Tanküberwachung 10. In dem in Fig. 1 gezeigten Beispiel wird die Tanküberwachung 10 in einem LKW 12 angeordnet und an einem LKW Kraftstofftank 14 angeschlossen.

Die Aktivierung der Tanküberwachung 10 kann z.B. durch Abstellen des LKWs 12 und Abziehen des Zündschlüssels oder durch Aktivierung der Zentralverriegelung des LKWs oder auch manuell durch einen Schaltkontakt bei Fahrzeugen 12 und Tankanlagen (nicht gezeigt) erfolgen. Bei stationären Tankanlagen kann die Tanküberwachung 10 mittels einer vorhandenen Alarmanlage oder über Schaltkontakte (nicht gezeigt) aktiviert werden.

Über einen Hauptschalter kann die Tanküberwachungseinrichtung 10 auch wieder ausgeschaltet werden. Der Hauptschalter kann wahlweise im Gehäuse der Tanküberwachungseinrichtung 10 angebracht sein oder z.B. mittels Leitungen 16 (gestrichelte Darstellung in Fig. 1) in der Kabine 18 des LKWs 12 angeordnet werden. Die Möglichkeit, die Tanküberwachungseinrichtung abzuschalten ist beispielsweise dann angebracht, wenn das Fahrzeug transportiert wird oder wenn Wartungsarbeiten am Fahrzeug durchgeführt werden. Die Tanküberwachung 10 kann mit einer zusätzlichen Batterie ausgestattet werden, so dass eine Sabotage durch Abklemmen der Hauptbatterien des LKWs 12 oder der Stromversorgung in der Nähe einer Tankanlage nicht möglich ist.

Wird die Hauptversorgung (Stromausfall) bei aktivierter Tanküberwachung abgeklemmt, so wird bei angeschlossenem Funksender (z.B. mittels einer Sirene oder eines GSM-Moduls) eine entsprechende Meldung als Unterspannungserkennung übertragen. Dies kann auch ein Indiz für einen bevorstehenden Diebstahl von Kraftstoff sein. Durch den Anschluss weiterer potenzialfreier Kontakte können speziell bei LKWs 12, Baustellenfahrzeugen und Einrichtungen zusätzliche Teile abgesichert werden. Speziell bei LKWs 12 und Baustellenfahrzeugen werden oftmals teure Anbauteile wie Außenspiegel 20, Ersatzreifen 22, Aggregate (nicht gezeigt) und andere Teile entwendet.

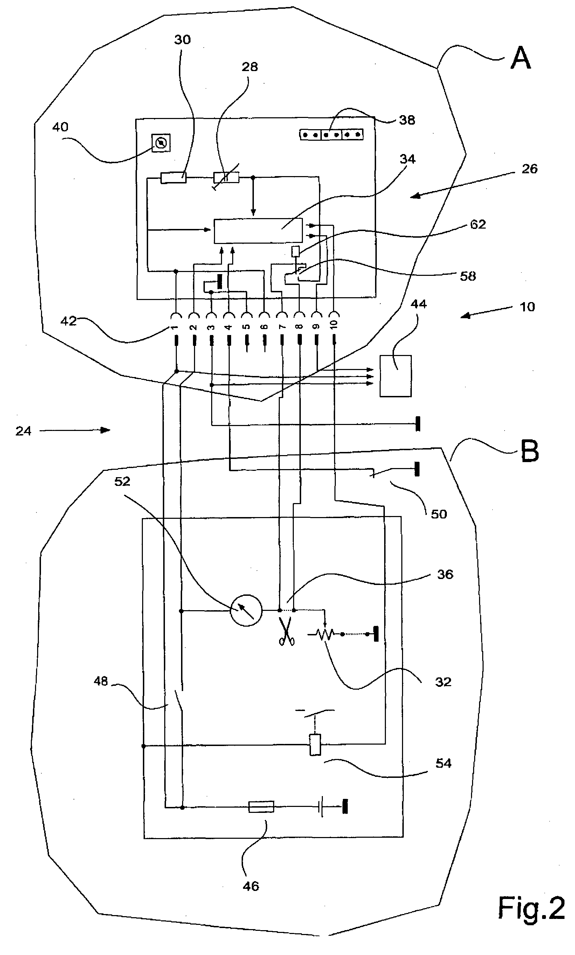

Die Fig. 2 zeigt eine bevorzugte Ausführungsform eines Schaltplans 24 der Tanküberwachung 10. Insbesondere zeigt der Bereich A der Fig. 2 eine elektronische Baugruppe 26 bestehend aus einem mehrstufigen Potentiometer 28 und einem Vorwiderstand 30, der in Verbindung mit dem variierenden Widerstand des Tankgebers (Tankfüllstandsmesser) 32 (nicht gezeigt aber im Einbauzustand mit den Klemmen 7 und 8 Verbunden) zu einem Spannungsteiler aufgebaut ist.

Des Weiteren ist ein frei programmierbarer Mikroprozessor 34 zur Auswertung des Spannungsteilers und zur Anpassung an unterschiedliche Kraftstofftanks vorgesehen, um in Abhängigkeit von Zeit und Spannungsdifferenz die Alarmauslösung an unterschiedlichen Tankanlagen anzupassen. Die Trennung der Überwachungseinrichtung 10 von der Messleitung 36 der normalen Tankanzeige des Fahrzeugs 12, welche erforderlich ist, da die Überwachungseinrichtung 10 während der Fahrt ausgeschaltet werden sollte, geschieht über einen Relaiskontakt 54 durch den Mikroprozessor 34 bei aktivierter Tanküberwachung 10 (mittels der Klemmen 7 und 8).

Die Tanküberwachung 10 umfasst eine Schnittstelle 38 zur Programmierung des Mikroprozessors 34 und eine Kontroll-LED 40 zum Prüfen, ob die Tanküberwachung 10 aktiviert ist und zur Anzeige des zeitlich eingestellten Messverhaltens, zum Beispiel durch Blinken.

Weiterhin umfasst die Tanküberwachung 10 eine Klemmleiste 42, mittels welcher über die Klemmen 1 bis 10 die Schnittstelle zum Fahrzeug 12 (bzw. zur Tankanlage), siehe Bereich B der Fig. 2, und zu den Meldegeräten 44 hergestellt wird.

In dem vorliegenden Beispiel sind die Klemmen 1 bis 10 folgendermaßen verschaltet:
An der Klemme 1 wird die positive Spannungsversorgung (beispielsweise eine Batterieklemme des Fahrzeugs 12) angeschlossen, wobei die Klemme 1 durch eine Vorsicherung 46 mit der Klemme 6 verbunden ist.
An der Klemme 2 liegt die gleiche positive Spannungsversorgung an, die an der Klemme 1 anliegt, jedoch nur dann ,wenn der AN/AUS Schalter für die Tanküberwachung im Fahrzeug 12 (z.B. wenn der Zündschlüssel eines Fahrzeugs 12 bedient wird) oder einer Tankanlage aktiviert wird. Wenn der AN/AUS Schalter eingeschaltet wird, ist ein Kontakt 48 geöffnet, dies bedeutet, dass die Baugruppe 26 aktiviert ist. Wenn der Schalter auf AUS geschaltet ist, ist der Kontakt 48 geschlossen und die elektrische Baugruppe 26 deaktiviert.
Klemme 3 ist der Masseanschluss der gleichzeitig mit der Fahrzeugmasse verbunden ist. Klemme 3 ist intern an der Klemme 5 angeschlossen, wobei der Masseanschluss von etwaigen Zusatzgeräten, wie z.B. einem GSM-Modul 44 oder anderen Baugruppen (nicht gezeigt) an der Klemme 5 angeschlossen wird.
An Klemme 4 können zusätzliche Überwachungseinheiten 50 angeschlossen werden. Diese können z.B. Reedkontakte, Pendelschalter, passive und aktive Baugruppen mit einer Kontaktauslösung zum Absichern von Aggregaten und Anbauteilen an Fahrzeugen 12 sein. Wenn die Überwachungseinheiten 50 ein zu meldendes Ereignis feststellt, beispielsweise das Aufbocken der einen Seite des Fahrzeugs, um die Räder zu klauen, schließt der zeichnerisch dargestellte Schalter, so dass die Überwachungseinrichtung 50 einen Masseanschluss an der Klemme 4 öffnet, der zu einer Alarmauslösung führt.
Wie bereits erwähnt, stellt die Klemme 5 einen Masseanschluss zur Versorgung von angeschlossenen Signalgebern 44 dar
Die Klemme 6 ist ein positiver Anschluss zur Versorgung von angeschlossenen Signalgebern 44.
Die Klemme 7 und die Klemme 8 führen beide zu der Messleitung 36 vom Tankgeber 32 und zum Messinstrument 52 (Tankanzeige) und die Messleitung 36 wird zwischen den Anschlussstellen der Leitungen, die von den Klemmen 7 und 8 kommen, beim Einbau der Tanküberwachungseinrichtung 10 getrennt, was schematisch durch die Schere angedeutet ist. Die von dem Tankgeber 32 kommende Leitung 36 ist somit an der Klemme 8 angeschlossen und die Klemme 7 wird an der Tankanzeige 52 angeschlossen. Zwischen den Klemmen 7 und 8 befindet sich in der Tanküberwachungseinrichtung ein Relaiskontakt 58, der den Tankgeber 32 entweder an den Mikroprozessor 34 oder an der Tankanzeige 52 anschließt. Der Relaiskontakt 58 wird vom Mikroprozessor 34 über ein Relais 62 angesteuert je nachdem ob der Schalter auf AN bzw. AUS gestellt ist.
Die Klemme 9 wird zu Ansteuerung eines externen Signalgebers 44, z.B. eines GSM/GPS-Moduls 44 verwendet.
Die Klemme 10 ist ein getakteter Anschluss für ein Relais 54 zur Ansteuerung der Fahrzeughupe oder anderer Signalgeber (nicht gezeigt), die bzw. der einen getakteten Impuls benötigt. Der getaktete Anschluss wird über den Mikroprozessor getaktet angesteuert und führt dazu, dass das Relais 54 im gleichen Takt öffnet und schließt und somit der angeschlossene Signalgeber ein- und ausschaltet.

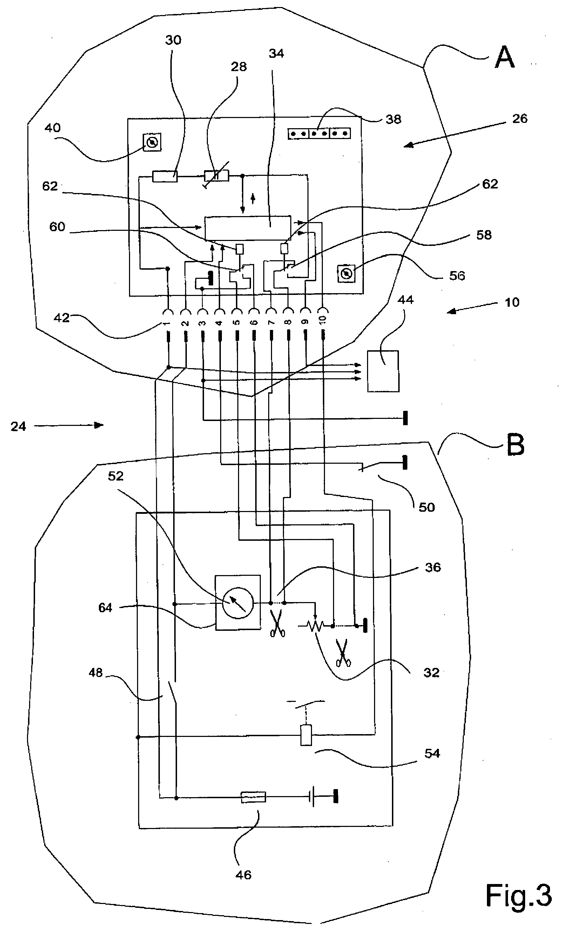

Die Fig. 3 zeigt eine weiter bevorzugte Ausführungsform eines Schaltplans 24 der Tanküberwachung 10. Bauteile mit der gleichen oder ähnlicher Funktion haben die gleichen Bezugszeichen wie die in den vorherigen Figuren gezeigten Bauteile. Insbesondere zeigt der Bereich A der Fig. 3 eine elektronische Baugruppe 26 bestehend aus einem mehrstufigen Potentiometer 28 und einem Vorwiderstand 30. Mittels des mehrstufigen Potenziometers können vorzugsweise nach der Programmierung des Mikroprozessors 34 Anpassungen an unterschiedliche Tankgrößen vorgenommen werden bzw. die Messgenauigkeit der Tanküberwachung kann mittels des Potentiometers verändert werden, um z.B. eine genauere Messung der im Kraftstofftank 14 vorhandenen Kraftstoffmenge durchzuführen.

Die Tanküberwachung 10 der Fig. 3 umfasst auch eine Schnittstelle 38 zur Programmierung des Mikroprozessors 34 und eine Kontroll-LED 40 zum Prüfen, ob die Tanküberwachung 10 aktiviert ist und zur Anzeige des zeitlich eingestellten Messverhaltens. Eine weitere LED 56 (z.B. eine rote LED) kann die Auslösung der Alarmmeldung an Klemme 10 anzeigen und z.B. für 30 Sekunden blinken.

Weiterhin umfasst die Tanküberwachung 10 der Fig. 3 auch eine Klemmleiste 42, mittels welcher über die Klemmen 1 bis 10 die Schnittstelle zum Fahrzeug 12 (bzw. zur Tankanlage), siehe Bereich B der Fig. 2, und zu den Meldegeräten 44 hergestellt wird. In dem vorliegenden Beispiel sind die Klemmen 1 bis 10 folgendermaßen verschaltet:
An der Klemme 1 wird die positive Spannungsversorgung (beispielsweise eine Batterieklemme des Fahrzeugs 12) angeschlossen, wobei die Klemme 1 durch eine Vorsicherung 46 mit der Klemme 1 verbunden ist.
An der Klemme 2 liegt die gleiche positive Spannungsversorgung an, die an der Klemme 1 anliegt, jedoch nur dann, wenn der AN/AUS Schalter im Fahrzeug 12 (z.B. wenn der Zündschlüssel eines Fahrzeugs 12 bedient wird - Zündung AUS) oder einer Tankanlage aktiviert wird. Wenn der AN/AUS Schalter ausgeschaltet wird, ist ein Kontakt 48 geöffnet, dies bedeutet, dass die Baugruppe 26 aktiviert ist. Wenn der Schalter auf EIN geschaltet ist, ist der Kontakt 48 geschlossen und die elektrische Baugruppe 26 deaktiviert.
Klemme 3 ist der Masseanschluss, der gleichzeitig mit der Fahrzeugmasse verbunden ist. Klemme 3 ist intern an der Klemme 5 angeschlossen, wobei der Masseanschluss von etwaigen Zusatzgeräten, wie z.B. einem GSM-Modul 44 oder anderen Baugruppen (nicht gezeigt) auch an der Klemme 5 angeschlossen wird.
An Klemme 4 können zusätzliche Überwachungseinheiten 50 angeschlossen werden. Diese können z.B. Reedkontakte, Pendelschalter, passive und aktive Baugruppen mit einer Kontaktauslösung zum Absichern von Aggregaten und Anbauteilen an Fahrzeugen 12 sein. Wenn die Überwachungseinheiten 50 ein zu meldendes Ereignis feststellt, beispielsweise das Aufbocken der einen Seite des Fahrzeugs, um die Räder zu klauen, öffnet der zeichnerisch dargestellte Schalter, so dass die Überwachungseinrichtung 50 einen Masseanschluss an der Klemme 4 trennt, der zu einer Alarmauslösung führt. An diesem Anschluss kann auch der Tankdeckel über einen Kontakt angeschlossen werden. Das Betätigen dieses Kontaktes wird im Speicher des Mikrocontrollers festgehalten und kann nachträglich ausgelesen und für Auswertungen ohne Alarmauslösung verwendet werden. Die Verwendung eines solchen zusätzlichen Sensors ermöglicht es z.B. jedes Öffnen des Tankdeckels zu erfassen und abzuspeichern, so dass ein Öffnen des Tankdeckels mit den Füllzeiten des Kraftstofftanks 14 verglichen werden kann, um z.B. zu überprüfen, ob eine mögliche Tanköffnung zwischen zwei Füllvorgängen stattgefunden hat, was auf eine Entnahme von Kraftstoff deuten würde. Sollte der Mikroprozessor mit einem GSM-Modul zusammenarbeiten, kann auch der Ort der Öffnung des Tankdeckels mittels eines GPS-Signals abgespeichert werden, um zu überprüfen, wo eine mögliche Entnahme stattgefunden hat.

Wie bereits erwähnt, stellt die Klemme 5 einen Masseanschluss zur Versorgung von angeschlossenen Signalgebern 44 dar und ist mit Klemme 3 überbrückt.

Zwischen den Klemmen 5 und 6 befindet sich ein Relaiskontakt 60 zum Durchschalten der Klemme 5 und 6 nach Masse. Der Relaiskontakt 60 wird ebenfalls vom Relais 62 aufgrund einer Ansteuerung des Mikroprozessors betätigt. D.h. bei dieser Ausführungsform ist das Relais 62 ein zweipoliges Relais mit Relaiskontakten 58, 60, könnte aber wahlweise durch zwei getrennte Relais 62 realisiert werden. Wenn gemäß Fig. 3 die Klemmen 5 und 6 verwendet werden, wird die vom Tank kommende Leitung durchgetrennt (die Auftrennung wird mittels der Schere in Fig. 3 angezeigt). Zu Messzwecken kann dann der Tankgeber 32 über die Klemmen 5 und 6 gegen Masse geschaltet werden. Dies ist z.B. vorteilhaft, wenn das Fahrzeug über ein eigenes BUS-System verfügt, in dem die Tankleitung 36 isoliert bis in die Fahrzeugelektronik 64 geführt wird. Die Fahrzeugelektronik 64 ist in der Fig. 3 mittels eines rechteckigen Kastens schematisch dargestellt, die z.B. ein BUS-System beinhalten kann. In diesem Falle kann die Tankanzeige so realisiert werden, dass sie von der Fahrzeugelektronik 64 Signale erhält, die den Tankfüllstand widergeben.

Durch diese Art der Realisierung kann die Elektronik des erfindungsgemäßen Systems ohne jeglichen Eingriff in die Elektronik des Fahrzeuges angewandt werden, was einerseits besonders vorteilhaft ist und andererseits es ermöglicht, mit einem erfindungsgemäßen System die verschiedensten Arten von Tankgebern 32 von Fahrzeugen abzufragen und mit den verschiedensten Fahrzeugen verwendet zu werden. Ferner ist von Vorteil, dass die Fahrzeugelektronik 64 nicht in die Tanküberwachung eingreifen kann. Es handelt sich um zwei völlig autarke Systeme.

Die Klemme 7 und die Klemme 8 führen beide zu der Messleitung 36 vom Tankgeber 32 und zum Messinstrument 52 (Tankanzeige). Die Messleitung 36 wird zwischen den Anschlussstellen der Leitungen, die von den Klemmen 7 und 8 kommen, beim Einbau der Tanküberwachungseinrichtung 10 aufgetrennt, was schematisch durch die Schere angedeutet ist. Die von dem Tankgeber 32 kommende Leitung 36 ist somit an der Klemme 8 angeschlossen und die Klemme 7 wird an der Tankanzeige 52 angeschlossen. Zwischen den Klemmen 7 und 8 befindet sich in der Tanküberwachungseinrichtung ein Relaiskontakt 58, der den Tankgeber 32 entweder an den Mikroprozessor 34 oder an der Tankanzeige 52 anschließt. Der Relaiskontakt 58 wird vom Relais 62 betätigt, das vom Mikroprozessor 34 angesteuert wird, je nachdem, ob der Schalter 48 auf AN bzw. AUS gestellt ist.

Die Klemme 9 wird zu Ansteuerung eines externen Signalgebers 44, z.B. eines GSM/GPS-Moduls 44, verwendet.

Die Klemme 10 ist ein getakteter Anschluss für ein Relais 54 zur Ansteuerung der Fahrzeughupe oder anderer Signalgeber (nicht gezeigt), die bzw. der einen getakteten Impuls benötigt. Der getaktete Anschluss wird über den Mikroprozessor getaktet angesteuert und führt dazu, dass das Relais 54 im gleichen Takt öffnet und schließt und somit der angeschlossene Signalgeber ein- und ausschaltet. Als Funktionskontrolle ist parallel eine z.B. rote LED 41 angeschlossen, die gleichzeitig die Alarmauslösung darstellt.

Die Erfindung kann auch so betrachtet werden, dass durch die in den meisten Tanks vorhandene, in ihrem Messbereich unterschiedliche Widerstandsmessung oder Spannungsmessung zur Tankfüllstandanzeige 52 (Tankuhr) durch einen mehrstufigen Potentiometer 28 für einen Spannungsteiler angepasst wird. Bei Veränderung des Widerstandswertes oder des Spannungswertes, z.B. durch Entleeren bzw. Auffüllen des Tanks 14, wird ein Alarm ausgelöst und mittels eines Signalgebers 44 weitergegeben. Die vom Spannungsteiler kommenden Werte können über den Mikroprozessor 34 der Größe der Kraftstofftanks 14 angepasst werden. Die zusätzliche Montage der Tanküberwachung 10 ist vor allem bei bestehenden Tankanlagen ohne großen Aufwand eine wirkungsvolle, von außen nicht ersichtliche Überwachungsmöglichkeit. Damit kann auch ein möglicher Schaden durch Vandalismus gering gehalten werden, da die vorliegende Erfindung es ermöglicht, über den Signalgeber 44 auch ein stilles Signal an z.B. einen Sicherheitsdienst weiterzugeben, der gegebenenfalls den Schaden verringern kann und den bzw. die Täter festhalten oder abschrecken kann.

In der einfachsten Form der Tanküberwachung 10 kann durch das Verbinden von sechs im Fahrzeug 12 vorhandenen Leitungen (siehe Bereich B der Fig. 2) eine wirkungsvolle Alarmauslösung durchgeführt werden. Eine Alarmauslösung soll ebenfalls bei einer unbefugten Befüllung durch Fremdstoffe, beispielsweise in Sabotagefällen bei Baumaschinen, durchgeführt werden. Häufig werden Tanks von Baumaschinen und Fahrzeugen 12 durch Fremdstoffe, Wasser, Sand mutwillig sabotiert, so dass mit der vorliegenden Erfindung sowohl eine Sabotage am und auch der Diebstahl von Kraftstoffen erfasst werden.

Die Tanküberwachung 10 lässt sich, von außen nicht erkennbar, sabotagegeschützt anbringen. Nach Aktivierung der Tanküberwachung 10 und dem parallelen Anschluss an die Messwertleitung 36 des Tankgebers 32 (Tankuhr) wird durch eine zu große Veränderung des Widerstandwertes eine Alarmmeldung durchgeführt. Die Alarmmeldung kann sowohl als "Stiller Alarm" durch ein GSM-Modul 44 oder auch als abschreckender "Lauter Alarm", z.B. Hupe 44, Blinklicht 44, Sirenen 44 über Relais 54 erfolgen.

Die Täter werden bei einer optischen, akustischen Alarmmeldung abgeschreckt. Bei einem stillen Alarm über GSM 44 (Telefonmeldung) besteht die Chance, die Täter zu ergreifen. Bei Fahrzeugen 12 und LKWs 12, die täglich an festen Standorten geparkt werden, können durch ein Funkmodul 44 die Alarmmeldungen an ortsfeste Hausalarmanlagen (nicht gezeigt) weitergeleitet werden. Die Tanküberwachung 10 ist so ausgelegt, dass in Abhängigkeit einer bestimmten Zeit eine entsprechende Menge Kraftstoff zu- bzw. abgeführt werden muss, um dann eine Alarmmeldung zu tätigen. Die Auswertung lässt sich individuell über den Mikroprozessor 34 programmieren. Das heißt, dass Schwellwerte gesetzt werden können, die kleinste Veränderungen der Kraftstoffmenge zulassen ohne eine Alarmsignal zu erzeugen.

Durch den Anschluss der benötigten Leitungen, die in den meisten Fahrzeugen 12 an zentraler Stelle bereits vorhanden sind, ist eine einfache und schnelle Nachrüstung möglich. In der Grundversion ist eine Spannungsversorgung mit Plus/Minus 9-30 Volt und der Anschluss des Füllstandgebers 32 erforderlich. Ein Mikrocontroller 34 wertet die Widerstandsänderung des Füllstandgebers 32 über einen Spannungsteiler aus. Über einen Schaltausgang 9 wird wahlweise ein Signalgeber 44, z.B. Hupe 44, Licht 44, GSM-Modul 44 oder ein Funksender 44, zur Alarmmeldung angeschlossen. In Fahrzeugen 12, Baumaschinen und Tankanlagen ohne eine widerstandsabhängige Füllstandmessung (Tankuhr) kann durch mechanisch betätigte Schaltkontakte, z.B. am Einfüllstutzen der Tankanlage, ein Reedschalter, Pendelschalter zur Alarmauslösung führen.

Somit können mit der vorliegenden Erfindung Kraftstofftanks 14 überwacht werden und ein finanzieller Schaden, der mit solchen Diebstählen einhergeht, reduziert werden.

Um das erfindungsgemäße System einzusetzen, werden vom Kunden nur zwei Angaben benötigt:
a) ob die Füllstandmenge von 0 bis 1000 Ohm oder von 1000 bis 0 Ohm bei einem Tankgeber der mit Widerständen arbeitet oder von 0 bis 5V oder 5V bis 0V bei einem Tankgeber 32 der mit einer kapazitiven Messung arbeitet;
b) die Tankgröße, sprich das Volumens des Tanks in Liter gemessen. Mit diesen Angaben wird das erfindungsgemäße System bzw. der Mikroprozessor 34 programmiert.

In 99% der Fälle trifft diese Vorprogrammierung zu. In speziellen Fällen können feinere Einstufungen mittels des einstellbaren Potentiometers 28 gegebenenfalls kundenseitig vorgenommen werden.

### Bezugszeichenliste:

- 10: Tanküberwachungseinrichtung
- 12: LKW
- 14: Kraftstofftank
- 16: Kabine
- 18: Leitungen
- 20: Außenspiegel
- 22: Ersatzreifen
- 24: Schaltplan
- 26: elektronische Baugruppe
- 28: mehrstufiger Potentiometer
- 30: Vorwiderstand
- 32: Tankgeber
- 34: Mikroprozessor
- 36: Messleitung
- 38: Schnittstelle
- 40: Kontroll-LED
- 42: Klemmleiste 1-10
- 44: Signalgeber
- 46: Vorsicherung
- 48: Kontakt Tanküberwachung EIN/AUS
- 50: Überwachungseinheiten, Reedkontakte, externe Melder
- 52: Messinstrument, Tankanzeige
- 54: Relais
- 56: Kontroll-LED, Alarmauslösung
- 58: Relaiskontakt
- 60: Relaiskontakt
- 62: Relais
- 64: Fahrzeugelektronik

## Patentansprüche

1. Tanküberwachungseinrichtung (10) gegen Kraftstoffdiebstahl aus einem Kraftstofftank (12), die einen Tankfüllstandmesser (32), aufweist, wobei eine Kraftstoffmenge anhand eines Widerstandswertes oder eines Spannungswertes des Tankfüllstandmessers (32) gemessen wird,
wobei zusätzlich zum Tankfüllstandmesser (32) ein programmierbarer Mikroprozessor (34) vorgesehen ist und dass der Mikroprozessor (34) dazu ausgebildet ist, eine Veränderung des Widerstandswertes oder des Spannungswertes des Tankfüllstandmessers (32) zu erfassen und abzuspeichern und bei einer Veränderung des Widerstandswertes oder des Spannungswertes ein Alarmsignal auszulösen,
**dadurch gekennzeichnet, dass**
ein Potentiometer (28) vorgesehen ist, welcher mit dem Tankfüllstandmesser (32) kooperiert, um die Messwerte von unterschiedlichen widerstandsabhängigen Tankfüllstandmessern (32) und deren unterschiedliche Tankvolumen an die Tanküberwachungseinrichtung (10) anzupassen.

2. Tanküberwachungseinrichtung nach Anspruch 1,
**dadurch gekennzeichnet, dass**
der Potentiometer (28) ein mehrstufiger Potentiometer ist.

3. Tanküberwachungseinrichtung nach zumindest einem der vorstehenden Ansprüche,
**dadurch gekennzeichnet, dass**
der Mikroprozessor (34) dazu ausgebildet ist, Widerstandswerte oder Spannungswerte periodisch zu erfassen.

4. Tanküberwachungseinrichtung nach zumindest einem der vorstehenden Ansprüche,
**dadurch gekennzeichnet, dass**
der Mikroprozessor (34) dazu ausgebildet ist, ein lautloses Alarmsignal auszugeben.

5. Tanküberwachungseinrichtung nach zumindest einem der vorstehenden Ansprüche,
**dadurch gekennzeichnet, dass**
obere bzw. untere Schwellwerte vorgesehen sind, und der Mikroprozessor (34) ausgelegt ist, nur die Veränderungen des Widerstands- oder Spannungswertes zu berücksichtigen, die unterhalb des unteren Schwellwertes oder oberhalb des oberen Schwellwerts liegen, und/oderdass der obere bzw. untere Schwellwert in Abhängigkeit von Zeit und elektrischen Einheiten ausgewählt ist.

6. Tanküberwachungseinrichtung nach zumindest einem der vorstehenden Ansprüche,
**dadurch gekennzeichnet, dass**
die Tanküberwachungseinrichtung (10) beim Abschalten des Kraftstofftanks oder einer Maschine mit Kraftstofftank aktivierbar ist, und/oderdass der Mikroprozessor (34) dazu ausgelegt ist, die im Kraftstofftank vorhandene Kraftstoffmenge beim Abschalten des Kraftstofftanks zu ermitteln und abzuspeichern.

7. Tanküberwachungseinrichtung nach zumindest einem der vorstehenden Ansprüche,
**dadurch gekennzeichnet, dass**
ein Kontaktelement (54) vorgesehen ist, welches bei aktivierter Tanküberwachungseinrichtung die Ausgabe des Alarmsignals bewirkt.

8. Tanküberwachungseinrichtung nach zumindest einem der vorstehenden Ansprüche,
**dadurch gekennzeichnet, dass**
der Mikroprozessor über eine Programmierleiste programmierbar ist.

9. Tanküberwachungseinrichtung nach zumindest einem der vorstehenden Ansprüche,
**dadurch gekennzeichnet, dass**
der Mikroprozessor (34) dazu ausgebildet ist, anhand von gemessen Widerstandswerten einen vollen und einen leeren Kraftstofftank zu erfassen und eine Datenbank zu erstellen, in der Kraftstoffmengen für einzelne Widerstandswerte abgespeichert sind.

10. Tanküberwachungseinrichtung nach zumindest einem der vorstehenden Ansprüche,
**dadurch gekennzeichnet, dass**
eine zusätzliche Batterie vorgesehen ist, um eine Notstromversorgung zu gewährleisten, und/oder dass die Tanküberwachungseinrichtung (10) dazu ausgebildet ist, zu erkennen ob die Notstromversorgung aktiviert worden ist, und dass die Tanküberwachungseinrichtung vorzugsweise dazu ausgebildet ist, beim Erkennen der aktivierten Notstromversorgung ein Sabotagealarmsignal auszugeben.

11. Tanküberwachungseinrichtung nach zumindest einem der vorstehenden Ansprüche,
**dadurch gekennzeichnet, dass**
auch bei nicht aktivierter Tanküberwachung unregelmäßige Kraftstoffentnahmen registrierbar und auslesbar sind, und/oder dass die Tanküberwachungseinrichtung (10) im Betrieb einer Maschine aktivierbar ist, z.B. kann mittels des programmierbaren Mikroprozessors die Kraftstoffmenge im Kraftstofftank periodisch überwacht werden und bei Über- bzw. Unterschreiten eines Schwellwertes eines vorgebbaren bzw. vorgegebenen Kraftstoffmittelverbrauchs ein Alarm ausgelöst werden.

12. Tanküberwachung nach zumindest einem der vorstehenden Ansprüche,
**dadurch gekennzeichnet, dass**
die Tanküberwachungseinrichtun mindestens einen Anschluss für mindestens einen weiteren Sensor (50) aufweist, der der Überwachung von mindestens einem Anbauteil eines Kraftstofftanks (12) oder einer Einheit, die den Kraftstofftank (12) beinhaltet, dient und dass die Tanküberwachungseinrichtung dazu ausgelegt ist, bei einer Veränderung eines Signals des mindestens einen Sensors ein Alarmsignal auszugeben oder das Erkennen des Signals im Mikroprozessor (34) abzuspeichern.

13. Tanküberwachung nach zumindest einem der vorstehenden Ansprüche,
**dadurch gekennzeichnet, dass**
der Mikroprozessor dazu (34) ausgebildet ist, die gespeicherten Widerstands- oder Spannungswerte periodisch zurückzusetzen.

14. Einheit mit einem Kraftstofftank und einer Tanküberwachung nach zumindest einem der vorstehenden Ansprüche.

## Claims

1. A tank monitor unit (10) with respect to fuel theft from a fuel tank (12) that has a tank level sensor (32), wherein an amount of fuel is measured with reference to a resistance value or a voltage value of the tank level sensor (32), wherein a programmable microprocessor (34) is provided in addition to the tank level sensor (32) and with the microprocessor (34) being configured for the purpose of detecting and storing a change of the resistance value or of the voltage value of the tank level sensor (32) and of initiating an alarm signal on a change of the resistance value or of the voltage value,
**characterized in that**
a potentiometer (28) is provided that cooperates with the tank level sensor (32) in order to adapt the measurement values of different resistance dependent tank level sensors (32) and their different tank volumes to the tank monitor unit (10).

2. A tank monitor unit in accordance with claim 1,
**characterized in that**
the potentiometer (28) is a multi-state potentiometer.

3. A tank monitor unit in accordance with at least one of the preceding claims,
**characterized in that**
the microprocessor (34) is configured for the purpose of periodically detecting resistance values or voltage values.

4. A tank monitor unit in accordance with at least one of the preceding claims,
**characterized in that**
the microprocessor (34) is configured for the purpose of outputing a silent alarm signal.

5. A tank monitor unit in accordance with at least one of the preceding claims,
**characterized in that**
upper threshold values and/or lower threshold values are provided and the microprocessor (34) is configured to only consider those changes of the resistance value or of the voltage value that lie beneath the lower threshold value or above the upper threshold value, and/or **in that** the upper threshold value and/or the lower threshold value is/are selected in dependence on time and electric units.

6. A tank monitor unit in accordance with at least one of the preceding claims,
**characterized in that**
the tank monitor unit (10) can be actuated on a switching off of the fuel tank or of a machine having a fuel tank, and/or **in that** the microprocessor (34) is configured for the purpose of determining and storing the amount of fuel present in the fuel tank on a switching off of the fuel tank.

7. A tank monitor unit in accordance with a least one of the preceding claims,
**characterized in that**
a contact element (45) is provided which brings about the output of the alarm signal for an activated tank monitor unit.

8. A tank monitor unit in accordance with at least one of the preceding claims,
**characterized in that**
the microprocessor can be programed via a programming rail.

9. A tank monitor unit in accordance with at least one of the preceding claims,
**characterized in that**
the microprocessor (34) is configured for the purpose of detecting a full and an empty fuel tank with reference to measured resistance values and to create a database in which the amounts of fuel are stored for individual resistance values.

10. A tank monitor unit in accordance with at least one of the preceding claims,
**characterized in that**
an additional battery is provided in order to ensure an emergency power supply and/or **in that** the tank monitor unit (10) is configured for the purpose of recognising whether the emergency power supply has been activated and **in that** the tank monitor unit is preferably configured for the purpose of outputting a sabotage alarm signal on recognition of the activated emergency power supply.

11. A tank monitor unit in accordance with at least one of the preceding claims,
**characterized in that**
irregular removal of fuel can be registered and read out also for a non-activated tank monitor and/or **in that** the tank monitor unit (10) can be activated during the operation of a machine, e.g. the amount of fuel in the fuel tank can be periodically monitored by means of the programmable microprocessor and an alarm can be initiated on exceeding and/or undercutting a threshold value of a predefinable and/or predefined fuel consumption.

12. A tank monitor in accordance with at least one of the preceding claims,
**characterized in that**
the tank monitor has at least one connection for at least one further sensor (50) that serves for the monitoring for at least one add-on part of a fuel tank (12) or a unit that includes the fuel tank (12) and **in that** the tank monitor unit is configured for the purpose of outputting an alarm signal on a change of a signal of the at least one sensor or to store the recognition of this signal in the microprocessor (34).

13. A tank monitor in accordance with at least one of the preceding claims,
**characterized in that**
the microprocessor (34) is configured for the purpose of periodically resetting the stored resistance values or voltage values.

14. A unit having a fuel tank and a tank monitor in accordance with at least one of the preceding claims.

## Revendications

1. Dispositif de surveillance de réservoir (10) à l'encontre d'un vol de carburant hors d'un réservoir de carburant (12), qui comprend un dispositif de mesure de niveau de remplissage (32) du réservoir, dans lequel une quantité de carburant est mesurée au moyen d'une valeur de résistance ou d'une valeur de tension du dispositif de mesure de niveau de remplissage (32),
dans lequel il est prévu, en plus du dispositif de mesure de niveau de remplissage (32) du réservoir, un microprocesseur (34) programmable, et le microprocesseur (34) est réalisé pour détecter et pour mémoriser une modification de la valeur de résistance ou de la valeur de tension du dispositif de mesure de niveau de remplissage (32) et, lors d'une modification de la valeur de résistance de la valeur de tension, pour déclencher un signal d'alarme,
**caractérisé en ce que**
il est prévu un potentiomètre (28) qui coopère avec le dispositif de mesure de niveau de remplissage (32) du réservoir afin d'adapter les valeurs de mesure de différents dispositifs de mesure de niveau de remplissage (32) en dépendance de la résistance et de leurs volumes différents au dispositif de surveillance de réservoir (10).

2. Dispositif de surveillance de réservoir selon la revendication 1,
**caractérisé en ce que** le potentiomètre (28) est un potentiomètre à plusieurs étages.

3. Dispositif de surveillance de réservoir selon l'une au moins des revendications précédentes,
**caractérisé en ce que** le microprocesseur (34) est réalisé pour détecter périodiquement des valeurs de résistance ou des valeurs de tension.

4. Dispositif de surveillance de réservoir selon l'une au moins des revendications précédentes,
**caractérisé en ce que** le microprocesseur (34) est réalisé pour délivrer un signal d'alarme silencieux.

5. Dispositif de surveillance de réservoir selon l'une au moins des revendications précédentes,
**caractérisé en ce qu'**il est prévu une valeur de seuil supérieure ou respectivement une valeur de seuil inférieure, et le microprocesseur (34) est conçu pour tenir compte uniquement des modifications de la valeur de résistance ou de la valeur de tension qui tombe au-dessous de la valeur de seuil inférieure ou au-dessus de la valeur de seuil supérieure,
et/ou **en ce que** la valeur de seuil supérieure ou la valeur de seuil inférieure est sélectionnée en fonction du temps et d'unités électriques.

6. Dispositif de surveillance de réservoir selon l'une au moins des revendications précédentes,
**caractérisé en ce que** le dispositif de surveillance de réservoir (10) est susceptible d'être activé lors de la mise à l'arrêt du réservoir de carburant ou d'une machine avec réservoir de carburant,
et/ou **en ce que** le microprocesseur (34) est conçu pour déterminer et pour mémoriser la quantité de carburant présente dans le réservoir de carburant lors de la mise à l'arrêt du réservoir de carburant.

7. Dispositif de surveillance de réservoir selon l'une au moins des revendications précédentes,
**caractérisé en ce qu'**il est prévu un élément de contact (54) qui provoque la délivrance du signal d'alarme lorsque le dispositif de surveillance de réservoir est activé.

8. Dispositif de surveillance de réservoir selon l'une au moins des revendications précédentes,
**caractérisé en ce que** le microprocesseur est programmable via une barrette de programmation.

9. Dispositif de surveillance de réservoir selon l'une au moins des revendications précédentes,
**caractérisé en ce que** le microprocesseur (34) est réalisé pour détecter, au moyen de valeurs de résistance mesurées, un réserve de carburant plein et un réservoir de carburant vide et pour établir une base de données dans laquelle des quantités de carburant pour des valeurs de résistance individuelles sont mémorisées.

10. Dispositif de surveillance de réservoir selon l'une au moins des revendications précédentes,
**caractérisé en ce qu'**il est prévu une batterie supplémentaire afin d'assurer une alimentation électrique de secours, et/ou **en ce que** le dispositif de surveillance de réservoir (10) est réalisé pour reconnaître si l'alimentation électrique de secours a été activée, et **en ce que** le dispositif de surveillance de réservoir est de préférence réalisé pour délivrer un signal d'alarme de sabotage lors de la reconnaissance de l'activation de l'alimentation électrique de secours.

11. Dispositif de surveillance de réservoir selon l'une au moins des revendications précédentes,
**caractérisé en ce que** même lorsque la surveillance du réservoir n'est pas activée il est possible d'enregistrer et de lire des prélèvements irréguliers de carburant, et/ou **en ce que** le dispositif de surveillance de réservoir (10) est susceptible d'être activé lors du fonctionnement d'une machine, par exemple la quantité de carburant dans le réservoir de carburant peut être surveillée périodiquement au moyen du microprocesseur programmable et, lors du passage au-dessus ou au-dessous d'une valeur seuil d'une consommation moyenne de carburant prédéterminée ou prédéterminable, une alarme est déclenchée.

12. Dispositif de surveillance de réservoir selon l'une au moins des revendications précédentes,
**caractérisé en ce que** le dispositif de surveillance de réservoir comprend au moins un raccordement pour au moins un autre capteur (50) qui sert à la surveillance d'au moins un élément rapporté d'un réservoir de carburant (12) ou d'une unité qui inclut le réservoir de carburant (12), et **en ce que** le dispositif de surveillance de réservoir est conçu, lors d'une modification d'un signal dudit au moins un capteur, pour déclencher un signal d'alarme ou pour mémoriser la reconnaissance du signal dans le microprocesseur (34).

13. Dispositif de surveillance de réservoir selon l'une au moins des revendications précédentes,
**caractérisé en ce que** le microprocesseur (34) est réalisé pour remettre périodiquement à zéro les valeurs de résistance ou de tension mémorisées.

14. Unité comprenant un réservoir de carburant et un dispositif de surveillance de réservoir selon l'une au moins des revendications précédentes.
